# EUROPÄISCHE PATENTSCHRIFT

(11) **EP 3 762 767 B1**
(45) Veröffentlichungstag und Bekanntmachung des Hinweises auf die Patenterteilung: **12.08.2026**
(21) Anmeldenummer: 19708846.1
(22) Anmeldetag: 04.03.2019
(51) Int. Cl.: G02B 27/01, B32B 17/10, C03B 23/02

(54) **HEAD-UP-DISPLAY FÜR EIN KRAFTFAHRZEUG UND VERFAHREN ZUM HERSTELLEN EINER ABDECKUNG FÜR EIN HEAD-UP-DISPLAY**
HEAD-UP DISPLAY FOR A MOTOR VEHICLE AND METHOD FOR PRODUCING A COVER FOR A HEAD-UP DISPLAY
AFFICHEUR TÊTE HAUTE POUR UN VÉHICULE AUTOMOBILE ET PROCÉDÉ DESTINÉ À FABRIQUER UN COUVERCLE POUR UN AFFICHEUR TÊTE HAUTE

(30) Priorität: 05.03.2018 DE 102018104899
(43) Veröffentlichungstag der Anmeldung: 13.01.2021
(73) Patentinhaber: Valeo Schalter und Sensoren GmbH, 74321 Bietigheim-Bissingen (DE)
(72) Erfinder: KUNTZE, Daniel, 74321 Bietigheim-Bissingen (DE); SIMONIS, Karl, 74321 Bietigheim-Bissingen (DE); LOGINENKO, Oleg, 74321 Bietigheim-Bissingen (DE); DILAVER, Fatih, 74321 Bietigheim-Bissingen (DE)
(74) Vertreter: Pothmann, Karsten
(86) Internationale Anmeldenummer: PCT/EP2019/055272
(87) Internationale Veröffentlichungsnummer: WO 2019/170583

(56) Entgegenhaltungen:
- EP-A1- 3 367 142
- WO-A1-2017/036582
- DE-T5- 112016 000 631
- US-A1- 2016 113 135

## Beschreibung

Die Erfindung betrifft ein Head-up-Display für ein Kraftfahrzeug der im Oberbegriff des Patentanspruchs 1 angegebenen Art. Des Weiteren betrifft die Erfindung noch ein Verfahren zum Herstellen einer Abdeckung für ein derartiges Head-up-Display.

Bei Head-up-Displays wird üblicherweise zwischen zwei unterschiedlichen Typen unterschieden. Einerseits gibt es Head-up-Displays, welche ein Bild auf eine Windschutzscheibe projizieren. Andererseits gibt es auch Head-up-Displays, welche ein Bild auf eine von einer Windschutzscheibe verschiedene sogenannte Combinerscheibe projizieren. Bei Head-up-Displays, welche das Bild auf eine Windschutzscheibe eines Kraftfahrzeugs projizieren, wird zum Schutz vor Staub oder anderen Verschmutzungen üblicherweise eine transparente Abdeckung verwendet, welche eine Öffnung eines Gehäuses solcher Head-up-Displays nach oben hin abdeckt.

Die Abdeckung ist deswegen transparent, damit üblicherweise Licht von einer Bilderzeugungseinheit über einen Vergrößerungsspiegel durch die Abdeckung hindurch zur Windschutzscheibe gelangen und somit auf diese projiziert werden kann. Typischerweise sind solche transparenten Abdeckungen aus Polykarbonat hergestellt und oftmals auch mit einer Kratzschicht und mit einer Antireflexionsschicht versehen. Darüber hinaus gibt es auch Laminate aus Polykarbonaten und Polarisatoren. In beiden Fällen wird eine Kratzschutzschicht benötigt, oft auch als Hardcoat bezeichnet, um Härten von 3H oder höher zu erhalten.

Zudem gibt es einen Trend zu Head-up-Displays mit immer größeren Anzeigebereichen, zum Beispiel um sogenannte kontaktanaloge Reality-Head-up-Displays zu realisieren. Bei derartigen Head-up-Displays wird oftmals die gesamte Windschutzscheibe genutzt, um der Realität überlagerte, also augmentierte Inhalte anzuzeigen. Bei derartigen Head-up-Displays ist es notwendig, dass die zugehörige Öffnung im Gehäuse der Head-up-Displays auch entsprechend groß beziehungsweise immer größer gestaltet wird.

Untersuchungen zeigen, dass es immer schwieriger wird, die jeweiligen Resonanzfrequenzen derartig großer transparenter Abdeckungen aus Kunststoff ausreichend in einen Bereich zu verschieben, in dem diese im normalen Fahrbetrieb nicht zu hörbaren Schwingungen angeregt werden können. Um dies zu erreichen, müssen aus Kunststoff hergestellte transparente Abdeckungen sehr dick gestaltet werden. Durch das Anregen der transparenten Abdeckung im Resonanzbereich kann es zu einem sogenannten Trommeln kommen, welches für Fahrzeuginsassen als negativ wahrgenommen wird.

Die DE 10 2009 032 141 A1 zeigt ein Head-up-Display für ein Kraftfahrzeug. Das Head-up-Display umfasst ein Gehäuse mit einer als Lichtaustrittsöffnung dienenden Öffnung. In die Öffnung ist zudem eine transparente Abdeckung aus Glas eingesetzt. Das Head-up-Display umfasst zudem einen im Gehäuse angeordneten Bildgeber, mittels welchem ein Bild durch die Abdeckung hindurch auf eine Windschutzscheibe des Kraftfahrzeugs projizierbar ist.

Die WO 2017/022568 A1 beschreibt ebenfalls eine Abdeckung für eine Lichtaustrittsöffnung eines Head-up-Displays, wobei die Abdeckung aus einer Vielzahl von laminierten Polarisationsfiltern besteht.

Dle WO2017036582A1 offenbart ein Head-Up-Display mit einer Abdeckscheibe aus Glas.

Es ist die Aufgabe der vorliegenden Erfindung, eine Lösung bereitzustellen, mittels welcher bei transparenten Abdeckungen von Head-up-Displays verhindert werden kann, dass diese im Betrieb zu akustisch wahrnehmbaren Schwingungen angeregt werden.

Diese Aufgabe wird durch ein Head-up-Display für ein Kraftfahrzeug sowie durch ein Verfahren zum Herstellen einer Abdeckung für ein Head-up-Display mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Das erfindungsgemäße Head-up-Display für ein Kraftfahrzeug umfasst ein Gehäuse mit einer Öffnung. Bei dieser Öffnung handelt es sich um eine Lichtaustrittsöffnung. Des Weiteren umfasst das Head-up-Display eine in die Öffnung eingesetzte transparente Abdeckung. Ferner umfasst das Head-up-Display einen in dem Gehäuse angeordneten Bildgeber, mittels welchem ein Bild durch die Abbildung hindurch auf eine Windschutzscheibe des Kraftfahrzeugs projizierbar ist. Bei dem Bildgeber kann es sich beispielsweise um ein TFT-Display handeln, welches von einer geeigneten Lichtquelle noch hinterleuchtet wird, beispielsweise mittels LEDs. Das erfindungsgemäße Head-up-Display zeichnet sich dadurch aus, dass die Abdeckung eine Glasscheibe mit einer geringeren Dicke als 500 µm aufweist.

Es ist also erfindungsgemäß vorgesehen, dass die Abdeckung gerade nicht aus einem Kunststoff, wie beispielsweise aus einem Polykarbonat, hergestellt ist. Der Erfindung liegt die Erkenntnis zugrunde, dass Abdeckungen aus Kunststoff üblicherweise einen zusätzlichen Kratzschutz benötigen und auch hinsichtlich ihres Temperatureinsatzbereiches relativ limitiert sind. Zudem müssen aus Kunststoff hergestellte Abdeckungen für derartige Head-up-Displays üblicherweise relativ dick ausgelegt werden, insbesondere wenn diese sehr große als Lichtaustrittsöffnungen dienende Öffnungen derartiger Gehäuse von Head-up-Displays abdecken sollen. Zudem beeinflussen aus Kunststoff hergestellte Abdeckungen ungewollt die Polarisation, insbesondere aufgrund von einer Doppelbrechung von Licht. Diese ungewollte Doppelbrechung kann u.a. ihren Ursprung in Materialspannungen im Kunststoff haben. Zudem beeinflussen aus Kunststoff hergestellte Abdeckungen auf unerwünschte Weise auch die Farbgebung des mittels des Bildgebers auf die Windschutzscheibe projizierten Bilds.

Das erfindungsgemäße Head-up-Display umfasst die besagte Abdeckung, welche die Glasscheibe mit einer geringeren Dicke als 500 µm aufweist. Mit anderen Worten handelt es sich bei der Glasscheibe also um sogenanntes ultradünnes Glas. Vorzugsweise weist die Glasscheibe eine Dicke von 25 µm bis 210 µm auf. Insbesondere in diesem Dickenbereich lässt sich die Glasscheibe, ohne diese zu erhitzen, verbiegen. Ein derartiges ultradünnes Glas kann im kalten Zustand eindimensional problemlos verformt werden, was ideal für Head-up-Displays ist, welche Bilder an die Windschutzscheibe projizieren. Vorzugsweise weist die Glasscheibe einen Krümmungsradius von 200 bis 400 Millimetern auf. Derartige Krümmungsradien sind problemlos ohne Erhitzung der Glasscheibe erzielbar, wenn diese die besagte geringere Dicke als 500 µm, insbesondere die besagte geringere Dicke als 210 µm, aufweist.

Zudem bietet die Glasscheibe auch ohne Kratzschutzbeschichtung einen deutlich höheren Kratzschutz als Kunststoffe mit einem sogenannten Hardcoat. Ferner verhindert die Glasscheibe ein Eindringen von UV-Licht in das Gehäuse des Head-up-Displays durch die als Lichtaustrittsöffnung dienende Öffnung, da das UV-Licht von der Glasscheibe absorbiert wird.

Insbesondere, wenn das Head-up-Display besonders große Bilder an die Windschutzscheibe projizieren soll, beispielsweise weil es sich bei dem Head-up-Display um ein eingangs bereits erwähntes kontaktanaloges Head-up-Display handelt, kann trotz der großen Abmessungen der Glasscheibe verhindert werden, dass diese im Fahrbetrieb beziehungsweise während der Verwendung des Kraftfahrzeugs zu unerwünschten, akustisch wahrnehmbaren Schwingungen angeregt wird. Denn Glas weist einen wesentlich höheren E-Modul im Vergleich zu Kunststoff auf, sodass insbesondere die erste Resonanzfrequenz in deutlich höhere Frequenzen verschoben wird als dies bei einer Abdeckung aus Kunststoff der Fall wäre. Dadurch kann die Glasscheibe wesentlich dünner ausgelegt werden als Kunststoffscheiben und insbesondere großformatige Abmessungen können anregungsfrei und mit normalen Dicken bei der Glasscheibe verbaut werden. Bei dem erfindungsgemäßen Head-up-Display wird durch die erfindungsgemäße Abdeckung also zuverlässig verhindert, dass diese zu unerwünschten und akustisch wahrnehmbaren Resonanzschwingungen angeregt wird.

Eine vorteilhafte Ausführungsform der Erfindung sieht vor, dass die Glasscheibe chemisch gehärtet ist. Die Härtung und somit die Bruchsicherheit der Glasscheibe können über die chemische Härtung nochmals erhöht werden. Andere Härtungsverfahren sind aber ebenfalls möglich.

In weiterer Ausgestaltung der Erfindung ist es vorgesehen, dass die Glasscheibe mit einem Dekordruck versehen ist, insbesondere mit einem schwarzen Rand. Die Glasscheibe kann problemlos mit solchem Dekordruck versehen werden. Dieser schwarze Rand muss nicht nur als Dekordruck dienen, sondern kann auch beispielsweise Keramikpartikel aufweisen, die dem Randbereich eine raue und haftende Oberfläche geben.

Eine weitere vorteilhafte Ausführungsform der Erfindung sieht vor, dass die Abdeckung ein Laminat ist, wobei die Glasscheibe die äußerste Schicht des Laminats bildet und mit wenigstens einer darunter angeordneten Schicht verklebt ist. Dies bedeutet also, dass die Abdeckung einen schichtweisen Aufbau aufweist, wobei die Glasscheibe in Richtung der Windschutzscheibe in der bestimmungsgemäßen Einbaulage des Head-up-Displays an der äußersten Stelle der Abdeckung angeordnet ist. Mit anderen Worten ist die Glasscheibe also als äußerste Schicht im eingebauten Zustand des Head-up-Displays der Windschutzscheibe zugewandt. Insbesondere kann durch den laminatartigen Aufbau der Abdeckung ein Splittern der Abdeckung verhindert werden, wobei durch die wenigstens eine zusätzliche Schicht der Glasscheibe mehr Stabilität verliehen werden kann.

In weiterer vorteilhafter Ausgestaltung der Erfindung ist es vorgesehen, dass die Glasscheibe mittels eines optischen Klebers mit der wenigstens einen Schicht verklebt ist.

Optische Kleber bringen insbesondere den Vorteil mit sich, dass diese transparent sind.

Dadurch wird die Bilddarstellung mittels des Head-up-Displays nicht beeinflusst.

Gemäß einer weiteren vorteilhaften Ausführungsform der Erfindung ist es vorgesehen, dass die Glasscheibe zumindest mittelbar mit einer Polarisationsfolie verklebt ist. Dabei ist es möglich, dass die Glasscheibe beispielsweise direkt mit der Polarisationsfolie verklebt ist. Mittels der Polarisationsfolie können die optischen Darstellungseigenschaften des Head-up-Displays verbessert werden.

In weiterer vorteilhafter Ausgestaltung der Erfindung ist es vorgesehen, dass die Glasscheibe zumindest mittelbar mit einer Antireflexionsfolie verklebt ist. Dabei kann die Glasscheibe entweder direkt mit der Antireflexionsfolie verklebt sein oder beispielsweise ist die Antireflexionsfolie mit der zuvor erwähnten Polarisationsfolie verklebt. Die Antireflexionsfolie verhindert unerwünschte Reflexionen bei dem Head-up-Display.

Gemäß einer weiteren vorteilhaften Ausführungsform der Erfindung ist es vorgesehen, dass die Antireflexionsfolie eine dreidimensionale Nanostruktur mit Erhebungen und/oder eine Antireflexionsschicht aufweist. In beiden Fällen kann zuverlässig verhindert werden, dass unerwünschte Reflexionen beim Head-up-Display entstehen.

In weiterer vorteilhafter Ausgestaltung der Erfindung ist es vorgesehen, dass die Abdeckung eine weitere Glasscheibe aufweist, welche die innerste Schicht des Laminats bildet. Beispielsweise ist es möglich, dass zwischen beiden Glasscheiben lediglich der optische Kleber angeordnet ist. Andere Konfigurationen sind aber ebenfalls möglich, sodass beispielsweise zwischen den beiden Glasscheiben noch eine oder mehrere der besagten Folien angeordnet sind. Die beiden Glasscheiben können dabei gleiche Dicken oder unterschiedliche Dicken aufweisen. Beispielsweise ist es denkbar, wenn die als Lichtaustrittsöffnung dienende Öffnung im Gehäuse besonders großformatig ist, dass es vorteilhaft ist, zwei der Glasscheiben mit einander verklebt zu verwenden.

Bei dem erfindungsgemäßen Verfahren zum Herstellen einer Abdeckung für das erfindungsgemäße Head-up-Display oder einer vorteilhaften Ausführungsform des erfindungsgemäßen Head-up-Displays wird ein Glasmaterial mit einer geringeren Dicke als 500 µm mit der zumindest einen weiteren Schicht in Form des Laminats verklebt.

Vorzugsweise wird das Glasmaterial als Rollenware auf einer ersten Rolle aufgerollt und die zumindest eine weitere Schicht ebenfalls als Rollenware auf einer zweiten Rolle aufgerollt bereitgestellt, wobei die beiden Rollen automatisiert aufeinander zur Herstellung der als Laminat ausgebildeten Abdeckung abgerollt und dabei miteinander verklebt werden, wobei anschließend die Abdeckung von der miteinander verklebten Rollenware abgetrennt wird. Mit anderen Worten kann es also vorgesehen sein, dass die als Laminat ausgebildete Abdeckung zunächst als Endlosmaterial in der beschriebenen Weise hergestellt und danach vereinzelt wird. Dadurch kann eine Vielzahl der als Laminat ausgebildeten Abdeckungen auf besonders effiziente und prozesssichere Weise hergestellt werden.

Alternativ ist es auch möglich, dass das Glasmaterial und die zumindest eine Schicht an eine vorgegebene Abmessung der Abdeckung angepasst zugeschnitten bereitgestellt und zur Herstellung der als Laminat ausgebildeten Abdeckung miteinander verklebt werden. Mit anderen Worten ist es alternativ also auch möglich, dass das Glasmaterial und die zumindest eine Schicht als einzelne sogenannte Sheets bereitgestellt werden, welche entsprechend der gewünschten Abmessung der Abdeckung bereits angepasst zugeschnitten worden sind. Zudem ist es auch möglich, dass das Glasmaterial und die zumindest eine Schicht vor dem Verkleben angepasst an eine vorgegebene Krümmung der Abdeckung vorgebogen werden. Dies bringt unter anderem den Vorteil mit sich, dass nicht erst ab dem Herstellen des Laminats dieses noch entsprechend gebogen werden muss. Dadurch kann verhindert werden, dass nach dem Laminiervorgang der einzelnen Schichten noch unnötige und unerwünschte Spannungen entstehen. Denn bei der als Laminat ausgebildeten Abdeckung ist insbesondere auf ein sogenanntes stressfreies Laminieren zu achten, um ein Delaminieren im verbauten Zustand und unter Temperatureinfluss zu vermeiden.

Die Erfindung betrifft des Weiteren ein Kraftfahrzeug mit dem erfindungsgemäßen Head-up-Display oder einer vorteilhaften Ausführungsform des erfindungsgemäßen Head-up-Displays.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen der Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Die Zeichnung zeigt in:
- Fig. 1: eine schematische Seitenansicht eines Kraftfahrzeugs mit einem Head-up-Display;
- Fig. 2: eine schematische Perspektivansicht des Head-up-Displays, welches in einem Gehäuse eine als Lichtaustrittsöffnung dienende Öffnung aufweist, die von einer in Explosionsdarstellung gezeigten Abdeckung verschlossen wird;
- Fig. 3: eine stark schematisierte Darstellung eines Verfahrens zum Herstellen der transparenten Abdeckung in Form eines Laminats;
- Fig. 4: eine schematische Darstellung einer Ausführungsform der laminatartig aufgebauten transparenten Abdeckung;
- Fig. 5: eine schematische Darstellung einer weiteren Ausführungsform der laminatartig aufgebauten transparenten Abdeckung;
- Fig. 6: eine schematische Darstellung einer weiteren Ausführungsform der laminatartig aufgebauten transparenten Abdeckung;
- Fig. 7: eine schematische Darstellung einer weiteren Ausführungsform der laminatartig aufgebauten transparenten Abdeckung; und in
- Fig. 8: eine schematische Darstellung einer weiteren Ausführungsform der transparenten Abdeckung, wobei diese nur eine Glasscheibe aufweist.

In den Figuren sind gleiche oder funktionsgleiche Elemente mit den gleichen Bezugszeichen versehen worden.

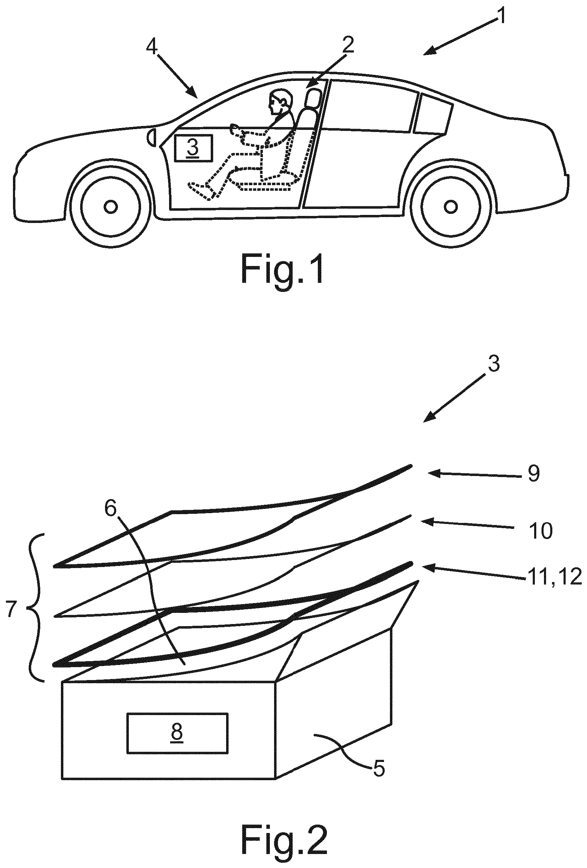

Ein Kraftfahrzeug 1 ist in einer schematischen Seitenansicht in Fig. 1 gezeigt. Vor einem Fahrer 2 des Kraftfahrzeugs 1 ist ein Head-up-Display 3 angeordnet, mittels welchem ein Bild auf einer Windschutzscheibe 4 des Kraftfahrzeugs 1 projiziert werden kann.

In Fig. 2 ist das Head-up-Display 3 in einer schematischen Perspektivansicht gezeigt. Das Head-up-Display 3 umfasst ein Gehäuse 4 mit einer als Lichteintrittsöffnung dienenden Öffnung 6. Die Öffnung 6 wird von einer transparenten Abdeckung 7 verdeckt, welche vorliegend in einer Explosionsansicht dargestellt ist. Zudem ist in dem Gehäuse 5 des Head-up-Displays 3 ein schematisch angedeuteter Bildgeber 8 angeordnet, mittels welchem ein Bild durch die transparente Abdeckung 7 hindurch auf die Windschutzscheibe 4 des Kraftfahrzeugs 1 projizierbar ist.

Der Bildgeber 8 kann beispielsweise ein TFT-Display und eine auf LED-Technik basierende Hinterleuchtung des TFT-Displays aufweisen. Zudem können in dem Gehäuse 5 noch optische Elemente, wie beispielsweise Faltspiegel und Konkavspiegel, angeordnet sein, um den Strahlgang des Bildgebers 8 in gewünschter Weise auf die Windschutzscheibe 4 zu lenken und zu skalieren.

Die Abdeckung 7 ist im vorliegend gezeigten Fall in Form eines Laminats aufgebaut, umfasst also mehrere Schichten. Die oberste Schicht wird durch eine Glasscheibe 9 gebildet, welche eine geringere Dicke als 500 µm aufweist. Mit anderen Worten handelt es sich bei der Glasscheibe 9 also um sogenanntes ultradünnes Glas. Vorzugsweise weist die Glasscheibe 9 eine Dicke zwischen 25 µm und 210 µm auf. Zudem weist die Glasscheibe 9 vorzugsweise einen Krümmungsradius von 200 bis 400 Millimetern auf.

Die Glasscheibe 9 kann zudem noch chemisch gehärtet sein, um diese besonders widerstandsfähig und vor allem auch kratzresistent zu machen. Zudem kann dadurch die Bruchsicherheit der Glasscheibe 9 erhöht werden. Ferner kann die Glasscheibe 9 auch mit einem hier nicht näher dargestellten Dekordruck versehen sein, beispielsweise in Form eines schwarzen Rands oder dergleichen.

Die Glasscheibe 9 ist mittels eines optischen Klebers 10 mit einer Polarisationsfolie 11 oder mit einer Antireflexionsfolie 12 verklebt. Andere schichtartige Aufbauten sind ebenfalls möglich.

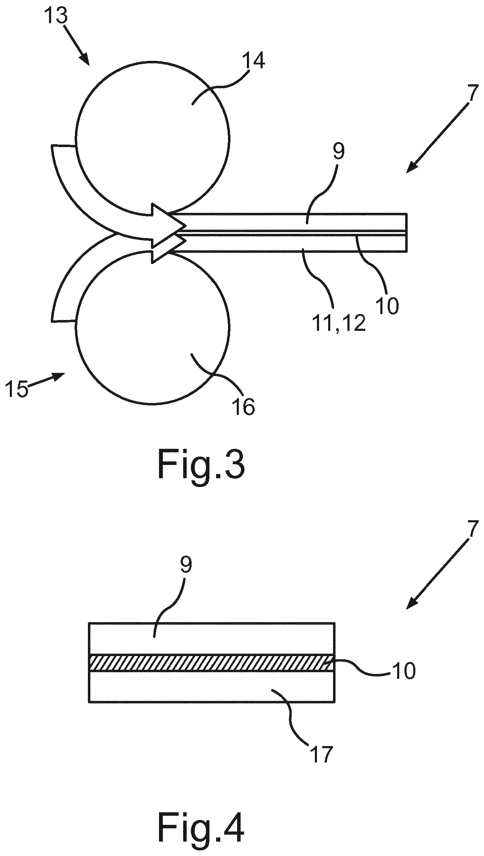

In Fig. 3 ist ein Verfahren zum Herstellen der Abdeckung 7 schematisch dargestellt. Bei dem hier dargestellten Verfahren handelt es sich um ein kontinuierliches Herstellverfahren. Ein Glasmaterial wird dabei als Rollenware 13 auf einer ersten Rolle 14 aufgerollt bereitgestellt. Des Weiteren wird die zumindest eine weitere Schicht 11, 12 ebenfalls als Rollenware 15 auf einer zweiten Rolle 16 aufgerollt bereitgestellt. Die beiden Rollen 14, 16 werden automatisiert aufeinander zur Herstellung der als Laminat ausgebildeten Abdeckung 7 aufeinander abgerollt und dabei miteinander verklebt. Anschließend wird die Abdeckung 7 von der miteinander verklebten Rollenware abgetrennt. Das Abtrennen kann beispielsweise mittels eines Lasers oder auch mittels anderer Schneidtechniken erfolgen. Durch dieses kontinuierliche Herstellverfahren ist es auf besonders prozesssichere und günstige Weise möglich, eine Vielzahl der als Laminate ausgebildeten Abdeckungen 7 herzustellen.

Alternativ ist es auch möglich, dass das Glasmaterial und die zumindest eine Schicht 11, 12 an eine vorgegebene Abmessung der herzustellenden Abdeckung 7 angepasst zugeschnitten bereitgestellt und dann miteinander verklebt werden. Zudem ist es auch möglich, dass in diesem Fall das Glasmaterial und die zumindest eine Schicht 11, 12 vor dem Verkleben angepasst an eine vorgegebene Krümmung der Abdeckung 7 vorgebogen werden.

In Fig. 4 ist eine weitere Ausführungsform der laminatartig aufgebauten Abdeckung 7 schematisch dargestellt. Bei dem hier gezeigten Ausführungsbeispiel ist die äußere Glasscheibe 9 mittels des optischen Klebers 10 mit einer weiteren Glasscheibe 17 verklebt worden.

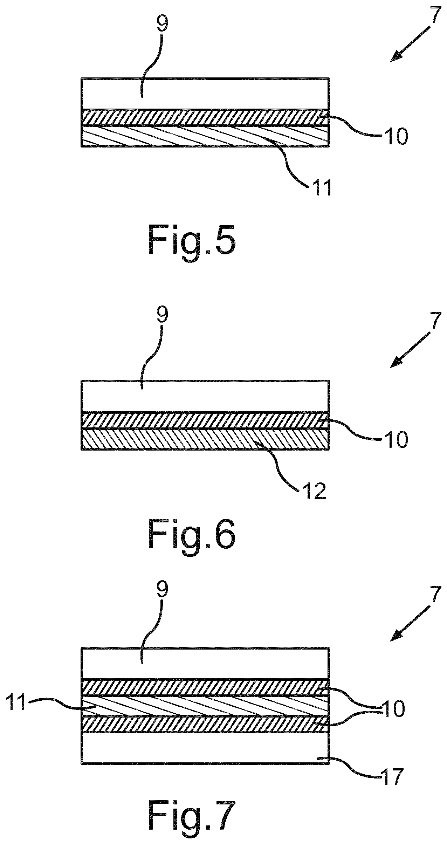

In Fig. 5 ist eine weitere Ausführungsform der Abdeckung 7 schematisch dargestellt. Bei dem hier gezeigten Ausführungsbeispiel ist die äußere Glasscheibe 9 mittels des optischen Klebers 10 mit der bereits zuvor erwähnten Polarisationsfolie 11 verklebt worden.

In Fig. 6 ist eine weitere Ausführungsform der Abdeckung 7 schematisch dargestellt. Bei dieser Ausführungsform ist die äußere Glasscheibe 9 mittels des optischen Klebers 10 mit der zuvor bereits erwähnten Antireflexionsfolie 12 verklebt worden.

In Fig. 7 ist schließlich eine weitere Ausführungsform der Abdeckung 7 schematisch dargestellt. Bei dem hier gezeigten Ausführungsbeispiel umfasst die Abdeckung 7 wiederum die beiden Glasscheiben 9, 17, wobei diese über den jeweiligen optischen Kleber 10 mit der Polarisationsfolie 11 verklebt worden sind.

Der optische Kleber 10 kann in allen Ausführungsbeispielen beispielsweise eine Dicke von 10 µm aufweisen. Die beiden Glasscheiben 9, 17 können beispielsweise jeweils eine Dicke von 150 µm aufweisen. Auch ist es beispielsweise möglich, dass die Glasscheibe 9 eine Dicke von 200 µm aufweist. Die Polarisationsfolie 11 kann beispielsweise eine Dicke von 50 µm aufweisen, wobei die Antireflexionsfolie 12 beispielsweise eine Dicke von 250 µm aufweisen kann. Bei der Antireflexionsfolie 12 kann es sich beispielsweise um eine Polykarbonatfolie handeln, welche mit einer dreidimensionalen Nanostruktur mit Erhebungen und/oder mit einer Antireflexionsschicht versehen ist.

Die als Laminat ausgebildete Abdeckung 7 mit der als ultradünnes Deckglas ausgebildeten Glasscheibe 9 hat bei allen Ausführungsformen den Vorteil, dass durch das deutlich höhere E-Modul der Glasscheibe 9 im Vergleich zu Kunststoff die erste Resonanzfrequenz in deutlich höhere Frequenzen verschoben wird, infolgedessen die Abdeckung 7 im Fahrbetrieb beziehungsweise beim Gebrauch des Kraftfahrzeugs 1 nicht in unerwünschte, hörbare Schwingungen versetzt werden kann.

Die gezeigten Ausführungsformen der Abdeckung 7 eignen sich vor allem auch besonders gut dann, wenn es sich bei dem Head-up-Display 3 um ein sogenanntes kontaktanaloges Head-up-Display handelt, mittels welchem beispielsweise über die gesamte Windschutzscheibe 4 verteilt verschiedenste Informationen zur Anreicherung beziehungsweise Augmentierung der Realität eingeblendet werden. In dem Fall ist die Öffnung 7 im Gehäuse 5 des Head-up-Displays 3 entsprechend groß. Trotz der relativ großen Abmessung der Öffnung und der damit einhergehenden großen Dimensionierung der Abdeckung 7 kann diese aufgrund ihrer Bauweise anregungsfrei, also ohne, dass unerwünschte Geräusche entstehen, im Kraftfahrzeug 1 verwendet werden.

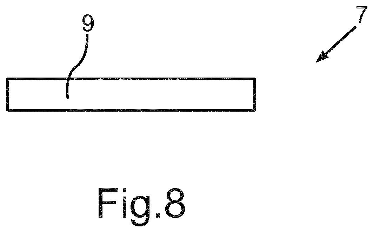

Schließlich ist in Fig. 8 noch eine weitere Ausführungsform der Abdeckung 7 gezeigt. Diese ist im Gegensatz zu den anderen gezeigten Ausführungsformen nicht als Laminat aufgebaut. Stattdessen umfasst die Abdeckung 7 nur die eine Glasscheibe 9. Diese kann beispielsweise mittels geeigneter Kleber am Gehäuse 5 des Head-up-Displays 3 (siehe Fig. 2) befestigt werden.

## Patentansprüche

1. Head-up-Display (3) für ein Kraftfahrzeug (1), umfassend
- ein Gehäuse (5) mit einer als Lichtaustrittsöffnung dienenden Öffnung (6);
- eine in die Öffnung (6) eingesetzte transparente Abdeckung (7);
- einen in dem Gehäuse (5) angeordneten Bildgeber (8), mittels welchem ein Bild durch die Abdeckung (7) hindurch auf eine Windschutzschutzscheibe (4) des Kraftfahrzeugs (1) projizierbar ist;
- in dem Gehäuse (5) angeordnete optische Elemente, um den Strahlengang des Bildgebers (8) auf die Windschutzscheibe (4) des Kraftfahrzeugs (1) zu lenken und zu skalieren;
**dadurch gekennzeichnet, dass**
die Abdeckung (7) eine Glasscheibe (9) mit einer geringeren Dicke als 500 µm aufweist und die Abdeckung (7) ein Laminat ist, wobei die Glasscheibe (9) die äußerste Schicht des Laminats bildet und mit wenigstens einer darunter angeordneten Schicht (11, 12, 17) verklebt ist.

2. Head-up-Display (3) nach Anspruch 1,
**dadurch gekennzeichnet, dass**
die Glasscheibe (9) eine Dicke zwischen 25 µm und 210 µm aufweist.

3. Head-up-Display (3) nach Anspruch 1 oder 2,
**dadurch gekennzeichnet, dass**
die Glasscheibe (9) einen Krümmungsradius von 200 bis 400 mm aufweist.

4. Head-up-Display (3) nach einem der vorhergehenden Ansprüche,
**dadurch gekennzeichnet, dass**
die Glasscheibe (9) chemisch gehärtet ist.

5. Head-up-Display (3) nach einem der vorhergehenden Ansprüche,
**dadurch gekennzeichnet, dass**
die Glasscheibe (9) mit einem Dekordruck versehen ist, insbesondere mit einem schwarzen Rand.

6. Head-up-Display (3) nach Anspruch 1,
**dadurch gekennzeichnet, dass**
die Glasscheibe (9) mittels eines optischen Klebers mit der wenigstens einen Schicht (11, 12, 17) verklebt ist.

7. Head-up-Display (3) nach Anspruch 6,
**dadurch gekennzeichnet, dass**
die Glasscheibe (9) zumindest mittelbar mit einer Polarisationsfolie (11) verklebt ist.

8. Head-up-Display (3) nach Anspruch 6 oder 7,
**dadurch gekennzeichnet, dass**
die Glasscheibe (9) zumindest mittelbar mit einer Antireflexionsfolie (12) verklebt ist.

9. Head-up-Display (3) nach Anspruch 8,
**dadurch gekennzeichnet, dass**
die Antireflexionsfolie (12) eine dreidimensionale Nanostruktur mit Erhebungen und/oder eine Antireflexionsschicht aufweist.

10. Head-up-Display (3) nach einem der Ansprüche 1 bis 9,
**dadurch gekennzeichnet, dass**
die Abdeckung (7) eine weitere Glasscheibe (17) aufweist, welche die innerste Schicht des Laminats bildet.

11. Verfahren zum Herstellen einer Abdeckung (7) für ein Head-up-Display (3) nach einem der Ansprüche 1 bis 10, bei welchem ein Glasmaterial mit einer geringeren Dicke als 500 µm mit der zumindest einen weiteren Schicht (11, 12, 17) in Form des Laminats verklebt wird.

## Claims

1. Head-up display (3) for a motor vehicle (1), comprising
- a housing (5) with an opening (6) serving as a light exit opening;
- a transparent cover (7) inserted into the opening (6);
- an image generator (8) arranged in the housing (5), by means of which an image can be projected through the cover (7) onto a windshield (4) of the motor vehicle (1);
- optical elements arranged in the housing (5) to direct and scale the beam path of the image generator (8) onto the windshield (4) of the motor vehicle (1);
**characterized in that** the cover (7) has a glass pane (9) with a thickness less than 500 µm and the cover (7) is a laminate, wherein the glass pane (9) forms the outermost layer of the laminate and is bonded to at least one layer (11, 12, 17) arranged underneath.

2. Head-up display (3) according to claim 1, **characterized in that** the glass pane (9) has a thickness between 25 µm and 210 µm.

3. Head-up display (3) according to claim 1 or 2, **characterized in that** the glass pane (9) has a radius of curvature of 200 to 400 mm.

4. Head-up display (3) according to any one of the preceding claims, **characterized in that** the glass pane (9) is chemically hardened.

5. Head-up display (3) according to any one of the preceding claims, **characterized in that** the glass pane (9) is provided with a decorative print, in particular with a black border.

6. Head-up display (3) according to claim 1, **characterized in that** the glass pane (9) is bonded to the at least one layer (11, 12, 17) by means of an optical adhesive.

7. Head-up display (3) according to claim 6, **characterized in that** the glass pane (9) is at least indirectly bonded to a polarization film (11).

8. Head-up display (3) according to claim 6 or 7, **characterized in that** the glass pane (9) is at least indirectly bonded to an anti-reflection film (12).

9. Head-up display (3) according to claim 8, **characterized in that** the anti-reflection film (12) has a three-dimensional nanostructure with elevations and/or an anti-reflection layer.

10. Head-up display (3) according to any one of claims 1 to 9, **characterized in that** the cover (7) has a further glass pane (17) which forms the innermost layer of the laminate.

11. Method for producing a cover (7) for a head-up display (3) according to any one of claims 1 to 10, in which a glass material with a thickness less than 500 µm is bonded with the at least one further layer (11, 12, 17) in the form of the laminate.

## Revendications

1. Affichage tête haute (3) pour un véhicule automobile (1), comprenant
- un boîtier (5) avec une ouverture (6) servant d'ouverture de sortie de lumière ;
- un couvercle transparent (7) inséré dans l'ouverture (6) ;
- un générateur d'image (8) disposé dans le boîtier (5), au moyen duquel une image peut être projetée à travers le couvercle (7) sur un pare-brise (4) du véhicule automobile (1) ;
- des éléments optiques disposés dans le boîtier (5) pour diriger et mettre à l'échelle le trajet optique du générateur d'image (8) vers le pare-brise (4) du véhicule automobile (1) ;
**caractérisé en ce que** le couvercle (7) comprend une plaque de verre (9) d'une épaisseur inférieure à 500 µm et le couvercle (7) est un stratifié, la plaque de verre (9) formant la couche la plus externe du stratifié et étant collée à au moins une couche (11, 12, 17) disposée en dessous.

2. Affichage tête haute (3) selon la revendication 1, **caractérisé en ce que** la plaque de verre (9) a une épaisseur comprise entre 25 µm et 210 µm.

3. Affichage tête haute (3) selon la revendication 1 ou 2, **caractérisé en ce que** la plaque de verre (9) a un rayon de courbure de 200 à 400 mm.

4. Affichage tête haute (3) selon l'une des revendications précédentes, **caractérisé en ce que** la plaque de verre (9) est chimiquement durcie.

5. Affichage tête haute (3) selon l'une des revendications précédentes, **caractérisé en ce que** la plaque de verre (9) est pourvue d'une impression décorative, en particulier d'un bord noir.

6. Affichage tête haute (3) selon la revendication 1, **caractérisé en ce que** la plaque de verre (9) est collée à l'au moins une couche (11, 12, 17) au moyen d'une colle optique.

7. Affichage tête haute (3) selon la revendication 6, **caractérisé en ce que** la plaque de verre (9) est collée au moins indirectement à un film de polarisation (11).

8. Affichage tête haute (3) selon la revendication 6 ou 7, **caractérisé en ce que** la plaque de verre (9) est collée au moins indirectement à un film antireflet (12).

9. Affichage tête haute (3) selon la revendication 8, **caractérisé en ce que** le film antireflet (12) présente une nanostructure tridimensionnelle avec des élévations et/ou une couche antireflet.

10. Affichage tête haute (3) selon l'une des revendications 1 à 9, **caractérisé en ce que** le couvercle (7) comprend une autre plaque de verre (17) qui forme la couche la plus interne du stratifié.

11. Procédé de fabrication d'un couvercle (7) pour un affichage tête haute (3) selon l'une des revendications 1 à 10, dans lequel un matériau en verre d'une épaisseur inférieure à 500 µm est collé à l'au moins une autre couche (11, 12, 17) sous forme de stratifié.
